# EUROPEAN PATENT APPLICATION

(11) **EP 2 405 106 A1**
(43) Date of publication of application: **11.01.2012**
(21) Application number: 10425229.1
(22) Date of filing: 06.07.2010
(51) Int. Cl.: F01K 13/00, F01K 25/10, F28D 1/047, F02C 1/04, F01K 27/00, F23B 60/00

(54) **Biomass power plant**

(71) Applicant: Sib Siber S.p.A., 40134 Castel Maggiore (BO) (IT)
(72) Inventor: Monari, Marco, 40134 Bologna (IT); Menarini, Teresa, 40135 Bologna (IT)
(74) Representative: Postiglione, Ferruccio

(57) **Abstract**

The present invention relates to a biomass power plant (1). This plant (1) comprises a heat generator (2) comprising a burner (3) suitable for said biomass combustion, wherein to said combustion a flame and biomass combustion fumes are associated, a thermodynamic cycle electric energy production assembly (5), a main heat-exchanger (6) in communication with the burner (3) which puts the burner (3) and the electric energy production assembly (5) in a heat-transfer relationship. The main heat-exchanger (6) comprises a first plurality of pipes (21) which develop as a helix, delimiting a heat-transfer chamber (23) in the main heat-exchanger (6), and a second plurality of pipes (22) in fluid communication with the first plurality of pipes (21) which develop as a helix, externally at least partially encircling the first plurality of pipes (21). These first (21) and second (22) pluralities of pipes are adapted to carry a working fluid and are in fluid communication with the electric energy production assembly (5) such as to transfer to it, through said working fluid, part of the heat developed in the burner (3) during the biomasses combustion for implementing said thermodynamic cycle. The burner (3) is configured and arranged in respect to the heat-transfer chamber (23) such that, during the biomasses combustion, the flame develops at least partially within said heat-transfer chamber (23), so that the working fluid in the first plurality of pipes (21) is heated by convection by the fumes and by radiation by the combustion flame.

## Description

The present invention relates to a biomass power plant. In particular, the present invention relates to a cogeneration plant for producing electric energy and thermal energy from biomasses, preferably, but not exclusively, a small-sized plant, i.e. for producing small electric powers (lower than 1 MW).

At the present time, the utilization of alternative energy sources in respect to fossil fuels, such as petrol and derivatives thereof, is particularly needed. As a matter of fact, as it is known, such sources are associated to relevant environmental issues. Furthermore, they tend to be exhausted or, anyway, to increase their cost as the available stock on the planet decreases.

One of the alternative sources to fossil fuels are the biomasses, which are used in combustion and/or gasification processes for producing electric energy and/or thermal energy.

Biomasses are typically of vegetable or animal origin. Examples of vegetable biomasses are wood splinters (ground and chipped wood), pellet (pressed wood sawdust), dried pomace (which can be obtained from skins, pulp residues or fragments of olive stones), corn or cereals in general, PKS ("Palm Kernel Shell", i.e. the shell of the oil palm stone). Examples of animal biomass are the excreta (from chicken, equines, bovines or pigs, or the like).

Using the biomasses as a fuel results in a reduced environmental impact, in particular it makes possible to reduce CO₂, SOₓ, Noₓ and CO emissions, which are usually lower than those related to plants using fossil fuels.

The biomass plants known for the production of electric and/or thermal energy comprise a burner wherein the biomass is burnt. The hot combustion fumes move to a heat-exchanger, wherein they transfer heat to a working fluid which is subjected to a power thermodynamic cycle, such to produce electric energy.

The fumes can also be further used to transfer heat to produce hot water, for example.

However, the known plants are not actually capable of guaranteeing a sufficiently high energetic performance. In other words, part of the potentially available energy of the biomasses cannot be converted into electric and/or thermal energy. This is because the individual components that form the plants are not capable of guaranteeing suitable performances per se. Therefore, undesired energy dissipation occurs along the parts forming the plant.

For example, an area in which still too low performances are obtained is the burner where the biomasses are burnt, wherein a high part of the heat provided by combustion is dispersed. Of course, this compromises the energetic performance of the entire plant.

Therefore, it is the object of the present invention to provide a biomass power plant having a high energy efficiency.

This and other objects are achieved by a biomass power plant according to claim 1.

In order to fully understand the invention and recognise the advantages thereof, some exemplary, but not limitative, embodiments thereof will be disclosed below, referring to the accompanying Figures, wherein:
Figure 1 is a schematic illustration of a biomass power plant according to a first embodiment of the invention;
Figure 2 is a schematic illustration of a biomass power plant according to a second embodiment of the invention;
Figure 3 is a schematic illustration of a biomass power plant according to a third embodiment of the invention;
Figure 4 is a perspective view of a portion of the plant according to the invention;
Figure 5 is a side view of the portion of the plant in Figure 4;
Figure 6 is a sectional view, according to line VI-VI of the portion of the plant in Figure 5.

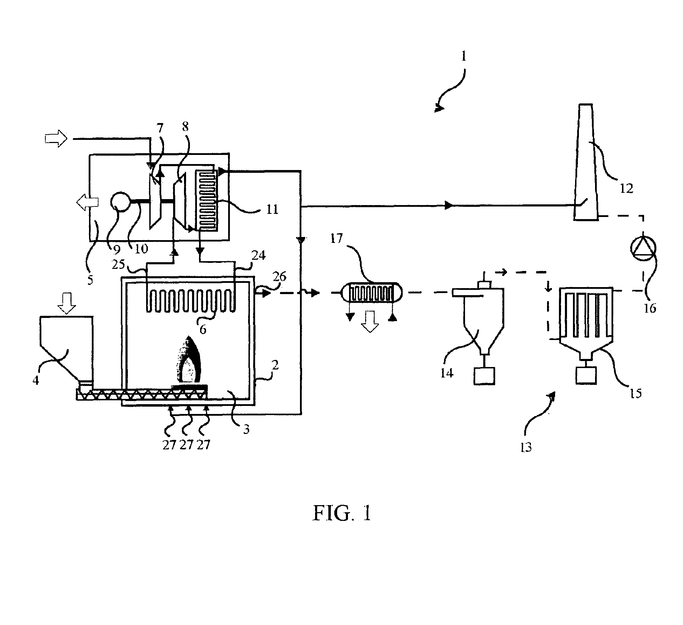

Referring to the accompanying Figures 1-3, a biomass power plant is designated by the reference 1.

The plant 1 comprises a biomass heat generator 2, in particular a burner 3 wherein the biomasses are burnt, and means 4 for introducing them into the burner 3 itself. Examples of biomasses which can be used in plant 1 are vegetable biomasses (splinters, pellet, pomace, cereals in general, PKS, or the like) or animal biomasses (excreta of chicken, equines, bovines or pigs, or the like). Biomasses can be, for example, stored in a storage device (not shown in the Figures) provided with a conveyor system for moving the biomasses to the input means 4. The biomass combustion is generally related to the production of a flame and combustion fumes.

The means 4 for inserting the biomasses into the burner 3 can be of different kinds and can comprise for example a hopper and auger or belt conveyors.

The plant 1 comprises an electric energy production assembly 5 using the heat developed by the biomass combustion in the burner 3. To this end, the electric energy production assembly 5 is placed in a heat-transfer relationship with the burner 3 by means of a main heat-exchanger 6, such to transfer the fume heat due to the biomass combustion in the burner 3 to the electric energy production assembly 5. The latter is suitable to implement a power thermodynamic cycle, of which fumes and flame due to the biomass combustion are hot sources. Advantageously, the heat-transfer relationship is achieved through a working fluid, preferably air.

Advantageously, indeed, the electric energy production assembly 5 is formed in order to make an air open Brayton cycle. To this end, it comprises a compressor 7, a turbine 8 and an electric generator 9, preferably co-axially mounted on the same shaft 10. Turbine 10 is preferably of the small-sized gas type (so-called "microturbine"), so that the whole plant is capable of delivering electric power lower than 1 MW. The microturbine is in alternative of the centrifugal, axial or radial type. The deliverable power from the turbine 8 depends on the temperature of the input air and the temperature at the output of the turbine, preferably with an about proportional relation. Advantageously, the turbine 8 is thermally an acoustically isolated from the external environment.

The compressor 7 is preferably of the radial centrifugal type.

The current generator 9 is preferably shaped such to produce electric current deliverable to an electric network, capable of conveying current having specific characteristics, in particular as to frequency and phase. To this end, the current generator 9 preferably comprises an alternator, wherein the current is produced at a high frequency, where, by "high frequency" a higher frequency than the network frequency is meant (as an example, the network frequency in Italy is 50 Hz). In order to convert the high-frequency generated current in a current which can be conveyed to the network, the current generator 9 can comprise, for example, a rectifier which converts the alternating current produced, into direct current and a static converter, which reconverts such a direct current into a tri-phase alternating current at the desired frequency. Obviously, according to the needs, different conversion patterns of the electric current can be provided in respect to the one described.

The main heat-exchanger 6 is operatively interposed between the compressor 7 and the turbine 8, so that in the electric energy production assembly 5 an open Brayton cycle can be implemented.

Thereby, a so-called "Externally Fired Gas Turbine" EFGT system is implemented, or, preferably, a so-called "Externally fired Micro Gas Turbine" EFMGT system, in the preferred case wherein the turbine 8 is small sized, as above said.

Preferably, the electric energy production assembly 5 further comprises an auxiliary heat-exchanger 11 operatively interposed between the compressor 7 and the main heat-exchanger 6 and put in heat transfer relationship with the air exiting the turbine 8, such to pre-heat the air itself entering the main heat-exchanger 6.

Advantageously, the plant 1 comprises a stack 12 for outputting the discharge fumes produced during the biomasses combustion in the environment. The stack 12 has also the function to discharge in the atmosphere part of the air used to implement the open Brayton cycle in the electric energy production assembly. The remaining part can be used as an oxidiser for the biomass combustion in the burner, as it will be disclosed in detail below.

Further advantageously, the plant 1 comprises a system 13 for filtering the fume-associated dusts, in order to avoid these from being discharged in the environment. According to a possible embodiment, such a filtering system 13, operatively placed between the burner 3 and the stack 12, comprises a multi-vortex 14 and a sleeve filter 15. The multi-vortex 14 carries out the function of retaining the rougher dust, whereas the sleeve filter 15 is suitable to retain the fine particles.

The multi-vortex 14, in particular, is advantageously suitable to divide, retain and decant the larger-sized solid particulate in the fumes. Preferably, it comprises a container for collecting decanted products, which can be removed, transported and emptied.

The sleeve filter 15, preferably, comprises a sleeved filtering head, a shaker for dropping the dusts entrapped in the sleeves and a tank for collecting the particulate. The sleeve filter 15 can also be provided with an automatic cleaning system, for example of the counter-flow compressed air type. A sleeve filter 15 can be coupled to a temperature control system such to dilute the fumes with the ambient air, in case the fumes have an excessive temperature, which could damage the sleeve filter 15. To the sleeve filter 15 also a bypass system (not shown in the Figures) can be coupled for the low-temperature start-up steps.

Between the dust filtering system 13 and the stack 12 a fume aspirator 16 can be provided to force the fume circulation and keep the circuit under vacuum conditions. The fume aspirator 16 is preferably of the centrifugal type and it is capable of working at high temperatures, in particular at the same temperatures as the fumes, when they pass therethrough.

Preferably, the plant 1 comprises a secondary heat-exchanger located such as to establish a heat-transfer relationship between the fumes exiting the burner 3 and one or more users. For example, the secondary heat-exchanger can be used for producing hot or superheated water, hot air or steam for heating or technological purposes, as the result of the heating by the fumes (Figure 1). Thereby, the plant 1 can achieve a cogeneration of electric energy (produced at the electric generator 9), and thermal energy (which can be drawn from the secondary heat-exchanger 17).

For example, the secondary heat-exchanger can be of the shell-and-tube type, preferably with a vertical axis (where the term "vertical" is to be understood with reference to the normal conditions of use of the plant 1), wherein in a primary circuit comprising a plurality of vertical tubes the fumes flow, whereas in a secondary circuit the air drawn from the environment by means of a suitable fan flows.

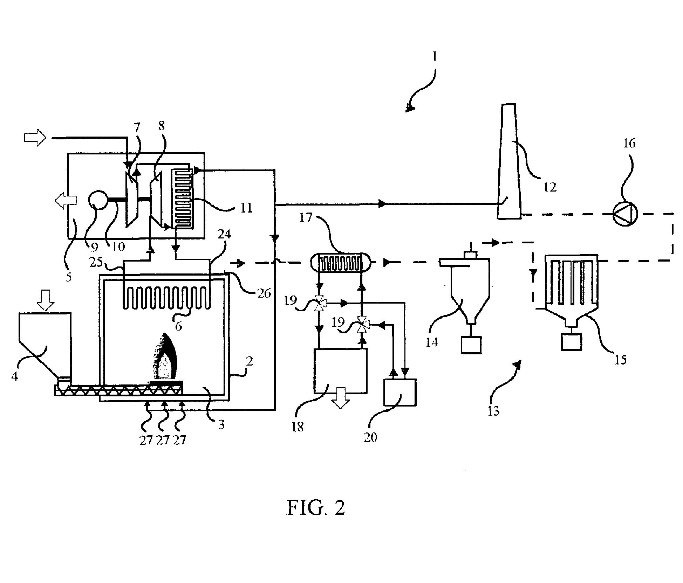

In alternative, or in addition, the secondary heat-exchanger 17 can be put in a heat-transfer relationship with at least a further electric energy production assembly 18, suitable for drawing heat from the secondary heat-exchanger 17 and use it in a further power thermodynamic cycle (Figure 2). For example, the fumes can transfer heat within the secondary heat-exchanger 17 to a working fluid, preferably water, which, in turn, transfer it to the further electric energy production assembly 18. To this end, the secondary heat-exchanger 17 can be, for example, of the vertical axis shell-and-tube type (where the term "vertical" is to be understood also herein with reference to the normal conditions of use of plant 1), wherein, within a primary circuit comprising a plurality of tubes, the fumes flow and wherein in a secondary circuit water flows.

According to a possible embodiment, the further electric energy production assembly 18 comprises an ORC cycle machine ("Organic Rankine Cycle"), i.e. a machine which is capable of implementing a Rankine cycle by using a working fluid capable of low temperature vaporization (in particular lower temperatures than the water evaporation temperature). Therefore, the working fluid of the ORC cycle machine is capable of vaporization when it exchanges heat with the heated water from the burner 3 fumes in the secondary heat-exchanger 17. Preferably, part of the hot air exiting the turbine 7 is used to transfer heat to the ORC cycle machine to improve the performance thereof.

The further electric energy production assembly 18 can be connected in parallel to one or more thermal users 20 (Figure 2). According to this arrangement, the heat of the heated water from the hot fumes from the burner 3 in the secondary heat-exchanger 17 is only partially transferred to the further electric energy production assembly 18. Instead, part of the heat is kept to provide heat to the thermal users 20. The delivery of the hot water and its slicing can be for example managed by one or more directional valve 19. Thereby it is possible to adjust the amount of hot water which is conveyed to a further electric energy assembly 18 or to thermal users 20. Possibly the electric energy production assembly 18 or one or more of the thermal users 20 can be isolated, interrupting the delivery of hot water.

The secondary heat-exchanger 17 can be used to provide heat to different users in respect to what described above. For example, it can be coupled to biomass-drying hot air generator systems, or room-refrigeration absorption systems. Generally, the secondary heat-exchanger 17 can be coupled to any system that needs thermal energy for operating.

According to a possible embodiment, parallel to the secondary heat-exchanger 17, a safety heat-exchanger 17 (not shown in the Figures) can be located for heat-exchange between fumes and ambient air having the function of emergency heat sink.

It is to be noted that the plant 1 according to the invention could possibly be further used for producing additional energy. For example, plant 1 may comprise a second secondary heat-exchanger (not shown in the figures) operatively placed downstream of the turbine 8, i.e. capable of drawing further heat from the air exiting the turbine 8, thereby achieving a further co-generative function.

Advantageously, plant 1 is provided with safety systems, for the protection thereof.

In particular, plant 1 may comprise a fire-fighting system to protect the biomass storage device. Such a system, following the detection of a higher temperature than a threshold value, can broaden the storage device.

The plant 1 may further comprise a fire-fighting system to avoid backfire towards the biomass supplying means. Such a system enables to cause a flooding at the burner input and/or the combustion to be blocked in case higher temperatures than the threshold values are detected.

Plant 1 may further comprise an emergency stack (not shown in the figures) coupled to the burner 3, which opening is adjusted by opening and closing suitable valves in case of overheating or failure.

Plant 1 may further comprise a fire-fighting system for the ashes drawn from the burner 3. To this end the flooding is provided in case a portion of the particulate was not perfectly unburnt. The system is actuated if a higher temperature than a threshold value is detected. Upon exceeding such a temperature, the combustion is also blocked.

According to an embodiment, plant 1 comprises an emergency generating set (not shown in the Figures) adapted to keep the operation of the plant itself and the safety systems above-described in service, in case the supply from the network fails.

According to an embodiment, the plant 1 comprises a plant blocking system in case of failure of the turbine 8 or any other components. The blocking system stops the biomass and oxidising air supply to the burner 3 of the plant. Further, preferably, such a plant blocking system, when activated, actuates a fan (not shown in the Figures) for cooling the turbine 8 and the main heat-exchanger 6. The hot air, in this case, is discharged to the environment, causing one or more vent valves (not shown in the Figures) to open.

Preferably, the operation of the plant is achieved by an automatic control system, for example provided with a PLC ("Programmable Logic Controller"). Programming by a user can occur through an operational control panel, or remotely, for example, by means of a modem connection or serial connection to an external computer.

In particular, the PLC is capable of being programmed for one or more of the following activities:
- controlling the biomass supply according to the power required;
- controlling and adjusting the combustion air;
- controlling and adjusting the fume aspirator 16 according to the suction values required;
- controlling and securing the conditions of burner 3.

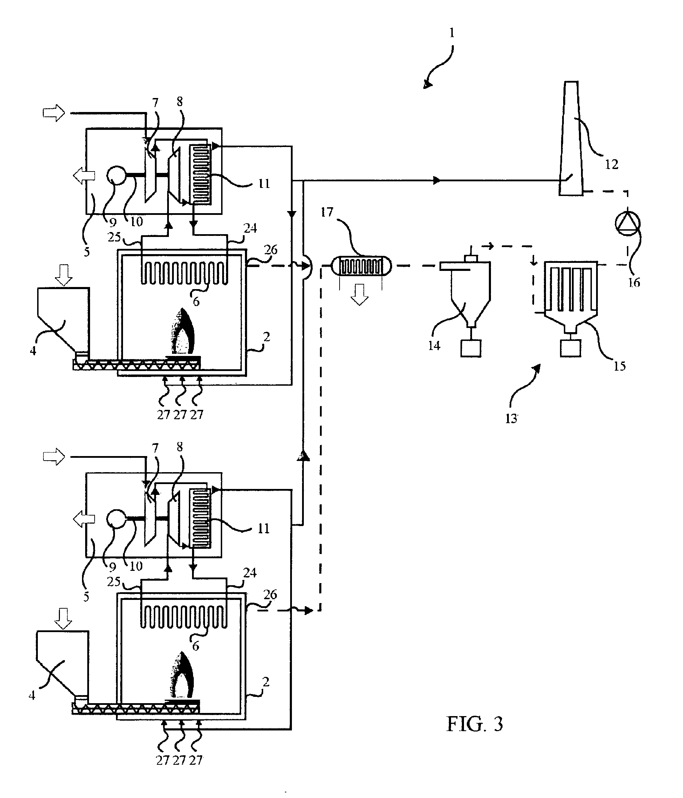

In order to provide a higher electric power than the one that can be delivered by the plant as described above, the plant 1 can be shaped for example according to the arrangement in Figure 3.

In particular, according to such an embodiment, the plant 1 comprises a plurality of heat generators 2 (preferably two), to which respective electric energy production assemblies 5 are coupled. The heat generators 2 are operatively located in parallel and produce electric energy independently of each other. The discharge fumes of the respective heat generators 2 are conveyed in a common disposal circuit provided with a common stack 12 and a common filtering system of the dust 13. Further the discharge air of the respective electric energy production assemblies 5 is conveyed to the common stack 12.

Furthermore, also the secondary heat-exchanger 17, if provided, is used to withdraw heat from the discharge fumes from all the heat generators 2 provided.

With reference to the embodiment illustrated in Figure 1, the normal operation of plant 1 will be now described in detail. It is to be noted that the tem-perature values that will be indicated are to be understood to be merely exemplary.

Biomasses are introduced in the burner 3 and burnt therein, producing a flame and hot combustion fumes. The hot combustion fumes are cooled in the main heat-exchanger 6, wherein they transfer heat to the air used in the open Brayton cycle by the electric energy production assembly 5, and exit the burner 2 at a high temperature, of about 650 C°. The fumes, then, reach the secondary heat-exchanger 17, where they transfer further heat to the working fluid, for example water, which supplies the further users, for the production of electric energy and/or thermal energy, according to what said above. Therefore, the fumes get even colder and reach the dust filtering system 13, where they are filtered and made suitable for being input in the atmosphere through the stack 12. The forced movement of the fumes from the dust filtering system 13 to the stack is achieved through the fume aspirator 16.

Referring now to the electric energy production assembly 5, as said above, it implements an open Brayton cycle. To this end, it draws air form the atmosphere and conveys it to the compressor 7, wherein air is compressed and heated. The thus treated air, then reaches the auxiliary heat-exchanger 11 where it is pre-heated (at about 500°C), performing a regeneration step, before reaching the main heat-exchanger 6, where, as a result of the heat-transfer with the hot fumes developed in the burner 3, it is further heated (at about 800°C-900°C). The air is then conveyed to the turbine 8, wherein it is expanded, performing a conversion from thermal energy to mechanical energy. The mechanical energy produced keeps the compressor 7 moving and keeps the current generator 9 active, which is, therefore, capable of producing electric current.

The air exiting the turbine 8 reaches the auxiliary heat-exchanger 11 wherein it transfers heat to the air exiting the compressor 7, pre-heating it according to what said above.

The air exiting the auxiliary heat-exchanger 11 has a temperature of about 250°C and it partially conveyed towards the burner 3, wherein it is used as an oxidizer for the biomass combustion. The amount of remaining air is, instead, conveyed to the stack 12, through which it is input in the atmosphere, thereby completing the open Brayton cycle. Part of such air, as said above, can be conveyed to a second secondary heat-exchanger for producing further electric or thermal energy.

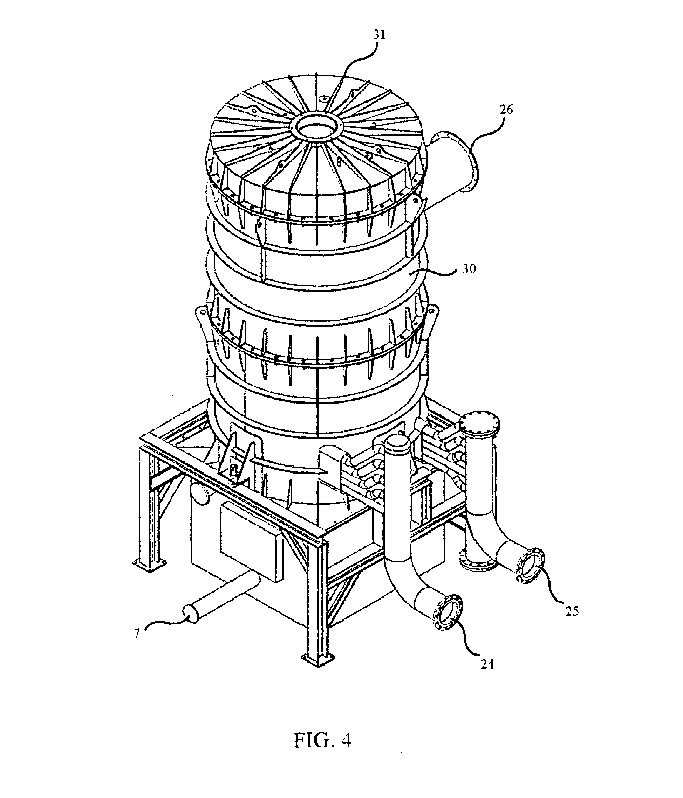

Referring to Figures 4-6, the main heat-exchanger 6 comprises pipes for heat transfer with the electric energy production assembly 5 through, in particular, the air used in the electric energy production assembly 5 for implementing the open Brayton cycle. The pipes can be located within a main body of the exchanger 30, which is preferably cylindrical, advantageously insulated. For example, the pipes may be inserted within a rammed refractory internally-shielded plating with a supporting roof made of high-density ceramic fibres and mineral wool insulating mat.

More particularly, the main heat-exchanger 5 comprises a first 21 and a second 22 plurality of pipes, preferably five, in fluid communication to each other. Thereby, a fluid passing in the first plurality of pipes 21 reaches subsequently also the second plurality of pipes 22. The pipes of the first 21 and second 22 plurality of pipes preferably have a circular cross-section.

Both the first 21, and the second 22 plurality of pipes extend in the main heat-exchanger 6 according to, preferably cylindrical, helixes.

The first plurality of pipes 21, as a result of its helix development, bounds a heat transfer chamber 23 with the main heat-exchanger.

The second plurality of pipes 22 extend with the said modes outside the first plurality of pipes 21, such to externally surround the latter at least partially. According to a possible embodiment, the first plurality of pipes 21 develops according to a left-handed helix and the second plurality of tubes 22 develop according to a right-handed helix, or vice versa.

Advantageously, the burner 3 is shaped and arranged in respect to the heat-transfer chamber 23 such that the flame, which is generated by the biomasses combustion, develops at least partially within the heat transfer chamber 23 without contacting the first plurality of pipes 21. Thereby, the combustion fumes transfer heat not only by convection to the first 21 and second 22 plurality of pipes, but also by radiation due to the flame, mainly to the first plurality of pipes 21. Indeed, the flame, partially entering the heat-transfer chamber 23, is surrounded by the first plurality of pipes, at least for a portion of their helix development extension.

Therefore, the amount of heat from the flame that is transferred to the first plurality of pipes 21 and to the working fluid they carry, is large. Due to this shape, the thermal efficiency of the main heat-exchanger 6 and therefore the whole efficiency of the plant are high. To this end, in particular, the first 21 and the second 22 plurality of pipes are placed at the burner output. This allows the flame to pass directly from the burner 3 to the combustion chamber 23, with the resulting advantages described above.

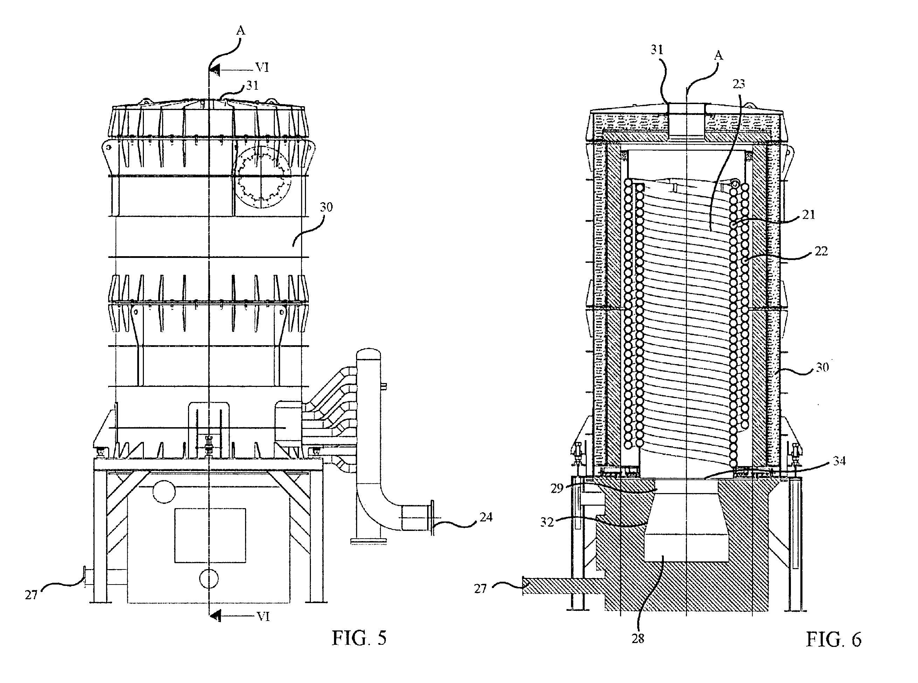

Advantageously, the first 21 and the second 22 plurality of pipes both develop according to cylindrical helixes, which are concentric to each other. Therefore, they identify a common development axis of the main heat-exchanger A. Preferably such a development axis of the main heat-exchanger A is vertical, i.e. oriented as the gravity, in the normal conditions of use of the plant 1 (see, for example, Figures 5 and 6)

Even more advantageously, the heat transfer chamber 23 is located above the burner 3 (where the term "above" is to be understood with reference to the normal conditions of use of the plant 1) and the burner 3 is shaped such that the flame develops approximately according to the main heat-exchanger development axis A. Moreover, as it has been said, preferably, the heat transfer chamber is directly communicating with the burner 3, in particular, it is located at the output of the burner 3. Such a shape makes addressing the flame within the heat-transfer chamber 23 easy, since the flame naturally tends to be oriented according to the main heat-exchanger development axis A. This way, the surface of the first plurality of pipes 21 is maximised, which is subjected to radiation by the flame.

Preferably, to the main body of the heat-exchanger 30, a door 31 is connected, which can be opened to inspect the heat-transfer chamber 23.

In order to achieve the fluid communication between the main heat-exchanger 6 and the electric energy production assembly 5, so that the latter may use the air heated in the main heat-exchanger 6, one or more openings 24 are provided for accessing the first plurality of pipes 21 and one or more openings 25 for exiting the second plurality of pipes 22. Preferably, only one input opening 24 and only one output opening 25 are provided, each connected to respective pipes of the first plurality of pipes 21 and the second plurality of pipes 22. Thereby, the working fluid, in particular air from the electric energy production assembly 5, passes through, subsequently, the first 21 and the second 22 pluralities of pipes and then, heated as a result of the heat-transfer with the flame, it reaches the electric energy production assembly 5 again.

Advantageously, the inlet opening 24 and the outlet opening 25 are both in the vicinity of the base of the heat-transfer chamber 23 (i.e. on the side of the heat-exchanger facing the burner 3). Even more advantageously, the fluid communication between the first 23 and the second 24 pluralities of pipes occurs at the top of the heat-transfer chamber 23 (i.e. the side of the main heat-exchanger 6 opposed to the base, where the inlet opening 24 and the outlet opening 25 are located). Thereby, the working fluid, in particular air, passes through, subsequently the first plurality of pipes 21 from the bottom to the top, and the second plurality 22 of pipes from the top to the bottom. In other words, the working fluid runs twice in the main heat-exchanger 6, the first time in a parallel flow with the fumes and the second time in counter-flow. Such a path is also maximised in its length by the helix-shape of the first 21 and the second pluralities of pipes. This maximises the heat-transfer and contributes to further increase the whole thermal efficiency of the plant.

The main heat-exchanger 6 comprises a fume-outlet opening 26 suitable for conveying the fumes outside the heat-transfer chamber 23. By the fume outlet opening 26, the main heat-exchanger 6 may be connected to the secondary heat-exchanger 17.

Since the hot fumes are often associated to soot, which tend to fall down by gravity, the first 21 and the second 22 pluralities of pipes are likely, due to a prolonged use, to be partially covered with soot, at cost of the capacity to conductively transmit heat to the air flowing therein. For this reason, according to a possible embodiment, the plant 1 comprises a, for example compressed air, blowing device, for removing the soot from the first 21 and the second 22 plurality of pipes. Further, means for extracting the soot removed from the blowing device may be provided.

In order to allow air from the electric energy production assembly 5 to enter, in particular from the turbine 8, to be used as an oxidiser, the burner 3 preferably comprises one or more air inlet openings 27. From such air inlet openings 27, air may be conveyed to the burner 3, where combustion occurs.

According to an embodiment, burner 3 comprises a combustion chamber 28 and a retention chamber 29. In the combustion chamber 28 the actual biomass combustion occurs, while in the retention chamber 28, advantageously located above the combustion chamber 28 and communicating therewith (where the expression "above" is to be intended to refer to the normal condition of use of the plant. See, for example, Figure 6), the completion of combustion fume oxidation occurs before they enter the heat-transfer chamber 23 of the main heat-exchanger 6 at a cross-over port 34, which communicates the burner 3, particularly the retention chamber 29, with the heat-transfer chamber 23.

Preferably, the combustion chamber 28 and the retention chamber 29 are coaxial to the main heat-exchanger development axis A. Thereby, a vertical assembly is made, wherein, along the main heat-exchanger development axis A, the combustion chamber 28, the retention chamber 29 and the heat transfer chamber 23 are aligned.

The combustion chamber 28 preferably is parallelepiped-shaped, with a longer horizontal axis (therefore orthogonal to the main heat-exchanger development axis A). The retention chamber 29, for example, may also be either parallelepiped-shaped or cylinder-shaped.

Between the combustion chamber 28 and the retention chamber 29, a roof 32 is advantageously provided. Such a roof 32 preferably extends horizontally in length and it enables, in a preferably median zone thereof, the passage of the burnt gases, as well as of the flame, from the combustion chamber 28 to the retention chamber 29. Thereby, a passage tunnel for the fumes and the flame from the combustion chamber 28 to the heat-transfer chamber 23 is created. Preferably, along such a tunnel, the roof 32 cross-section decreases towards the heat-transfer chamber 23. This enables the flame to be addressed within the heat-transfer chamber 23 in order to achieve the radiation of the first plurality of pipes 21, previously described.

The combustion chamber 28, the roof 32 and the retention chamber are advantageously thermally shielded.

According to a possible embodiment, the burner is of the movable grid type. Preferably, it comprises a grid defining a plurality of zones, being divided from each other, for the different biomass processing steps. In particular, these zones include a biomass arrival and pre-heating zone, a biomass lighting and combustion zone, a combustion completion zone, a biomass combustion ash discharge zone.

Advantageously, the plant 1 comprises a sensor system on which the automated control of its operation is based, as well as safety systems above disclosed. In particular, one or more of the following sensors are advantageously provided:
- temperature sensors, preferably one or more thermocouples, for detecting the air temperature in the burner 3;
- sensors for detecting the air pressure in the burner 3;
- temperature sensors, preferably one or more thermocouples, for detecting the output fume temperatures from the burner 3;
- temperature sensors, preferably one or more thermocouples, for detecting the output air temperature from the main heat-exchanger 6;
- sensors for detecting the output air pressure from the main heat-exchanger 6.

From the above description, a person skilled in the art may appreciate that the plant according to the invention has such features to achieve high thermal efficiencies and therefore high energy efficiencies as a whole. In particular, in the main heat-exchanger, the possibility to use the flame radiation, besides the convection heat-transfer from the fumes, allows to reduce the energy loss and therefore to improve the heat-transfer efficiency in the main heat-exchanger.

To the above-described embodiments of the biomass power plant, those skilled in the art, in order to fulfil specific incidental needs, can make several additions, modifications or replacements of parts with other operatively equivalent parts, however without departing from the scope of the appended claims.

## Claims

1. A biomass power plant (1) comprising:
- a heat generator (2) comprising a burner (3) suitable for said biomass combustion, to said combustion a flame and biomass combustion fumes being associated;
- a thermodynamic cycle electric energy production assembly (5);
- a main heat-exchanger (6) in communication with the burner (3) which puts the burner (3) and the electric energy production assembly (5) in a heat-transfer relationship,
**characterised in that** said main heat-exchanger (6) comprises a first plurality of pipes (21) which develop as a helix, delimiting a heat-transfer chamber (23) in the main heat-exchanger (6) and a second plurality of pipes (22) in fluid communication with the first plurality of pipes (21) which develop as a helix, externally at least partially encircling the first plurality of pipes (21), said first (21) and said second (22) pluralities of pipes being adapted to carry a working fluid and being in fluid communication with the electric energy production assembly (5) such as to transfer to it, through said working fluid, part of the heat developed in the burner (3) during the biomasses combustion for implementing said thermodynamic cycle, and **in that** said burner (3) is configured and arranged in respect to the heat-transfer chamber (23) such that, during the biomasses combustion, said flame develops at least partially within said heat-transfer chamber (23), so that the working fluid in the first plurality of pipes (21) is heated by convection by the fumes and by radiation by the combustion flame.

2. The plant (1) according to claim 1, wherein said first (21) and said second (22) pluralities of pipes develop according to concentric cylindrical helixes which identify a common main heat-exchanger development axis (A).

3. The plant (1) according to claim 2, wherein said main heat-exchanger development axis (A) is vertical.

4. The plant (1) according to claim 2 or 3, wherein said heat-transfer chamber (23) is arranged above said burner (3) and said burner (3) is configured such that said flame due to biomasses combustion develops approximately according to said main heat-exchanger development axis (A).

5. The plant (1) according to any one of claims 2 to 4, wherein said burner has a decreasing cross-section towards the heat-transfer chamber (23) and it is aligned to said heat-transfer chamber (23) along said main heat-exchanger development axis (A).

6. The plant (1) according to any one of the previous claims, wherein said first plurality of pipes (21) develops according to a left-handed helix and said second plurality of pipes (22) develops according to a right-handed helix, or vice versa.

7. The plant (1) according to any one of the previous claims, wherein said fluid communication between the main heat-exchanger (6) and the electric energy production assembly (5) occurs by means of one or more inlet openings (24) to the first plurality of pipes (21) and one or more outlet apertures (25) from the second plurality of pipes, said one or more inlet (24) and outlet (25) openings being both arranged near the base of the heat-transfer chamber (23) and said fluid communication between the first (21) and the second (22) plurality of pipes occurring at the top of the heat-transfer chamber (23).

8. The plant (1) according to any one of the previous claims, wherein said electric energy production assembly (5) is configured such to implement an air open Brayton cycle, and wherein said working fluid which runs through the first (21) and the second (22) plurality of pipes is said air.

9. The plant (1) according to the previous claim, wherein said burner (3) comprises one or more air inlet openings (27) adapted to draw part of said air exiting the electric energy production assembly (5) to use it as an oxidiser for the biomasses combustion in the burner (3).

10. The plant (1) according to any one of the previous claims, wherein said main heat-exchanger (6) comprises a fume outlet opening (26) adapted to convey the fumes outside the heat-transfer chamber (23), said fume outlet opening (26) being in fluid communication with a secondary heat-exchanger (17) which can be put in a heat-transfer relationship with one or more users to transfer to them part of the heat associated with the fumes exiting the main heat-exchanger (6).

11. The plant (1) according to the previous claim, wherein said secondary heat-exchanger (17) is put in a heat-transfer relationship with a further electricity-production assembly (18).

12. The plant (1) according to the previous claim, wherein said further power production assembly (18) comprises an "Organic Rankine Cycle" thermodynamic cycle machine.

13. The plant (1) according to any one of claims 8 to 12, wherein said electric energy production assembly (5) is in fluid communication with a second secondary heat-exchanger, such that part of said air exiting therefrom is usable to transfer heat to one or more users.

14. The plant (1) according to any one of the previous claims, wherein said burner (3) comprises a combustion chamber (28) for the biomasses combustion and a retention chamber (29) located above the combustion chamber (28) and communicating therewith for completing the oxidation of fumes before they enter the heat-transfer chamber (23) of the main heat-exchanger (6).

15. The plant (1) according to the previous claim, wherein said burner (3) comprises a roof (32) interposed between said combustion (23) and retention (29) chambers, said roof defining a passage between said combustion (23) and retention (29) chambers having a decreasing cross-section towards said heat-transfer chamber (23).
